Europäisches Patentamt

European Patent Office

Office européen des brevets

(19)

(11) **EP 1 457 858 A1**

(12) ## DEMANDE DE BREVET EUROPEEN

(43) Date de publication:
**15.09.2004 Bulletin 2004/38**

(51) Int Cl.7: **G06F 1/00**

(21) Numéro de dépôt: **03290655.4**

(22) Date de dépôt: **14.03.2003**

(84) Etats contractants désignés:
**AT BE BG CH CY CZ DE DK EE ES FI FR GB GR HU IE IT LI LU MC NL PT SE SI SK TR**
Etats d'extension désignés:
**AL LT LV MK RO**

(71) Demandeur: **SCHLUMBERGER Systèmes**
**92120 Montrouge (FR)**

(72) Inventeur: **Akkar, Mehdi-Laurent**
**94250 Gentilly (FR)**

(74) Mandataire: **Renault, Patricia et al**
**Schlumberger Systèmes,**
**36-38, rue de la Princesse**
**B.P. 45**
**78431 Louveciennes Cedex (FR)**

(54) **Procédé de sécurisation d'un ensemble électronique à cryptoprocesseur**

(57)    L'invention concerne un procédé de sécurisation d'un ensemble électronique comprenant un composant matériel susceptible de mettre en oeuvre de manière autonome un processus f de calcul utilisant une clé K. Le procédé consiste à calculer au moins deux clés nouvelles $K'^i$ telles qu'il existe au moins une desdites clés nouvelles qui soit identique à la clé K et au moins une desdites clés nouvelles qui soit différente de la clé K et à effectuer à l'aide dudit composant matériel ledit processus f de calcul successivement avec chacune desdites clés $K'^i$ calculées.

**FIG.3**

**Description**

La présente invention concerne un procédé de sécurisation d'un ensemble électronique comportant un composant matériel tel qu'un cryptoprocesseur pour mettre en oeuvre de manière autonome un algorithme cryptographique qui utilise une quantité secrète telle qu'une clé secrète. Plus précisément, le procédé vise à sécuriser ledit cryptoprocesseur contre un certain type d'attaques physiques— dites Differential Power Analysis (attaques électroniques d'ordre un ou supérieur) - qui cherchent à obtenir des informations sur la clé secrète à partir de l'étude de la consommation électrique de l'ensemble électronique au cours de l'exécution du calcul.

**DOMAINE TECHNIQUE**

Certains composants embarquent un DES hard. Ce DES a l'avantage d'être extrêmement rapide -de l'ordre de 20 micro-seconde- et apparemment de résister à des attaques de type SPA et DFA. Malheureusement il ne résiste pas à une attaque DPA du premier ordre. En effet avec un nombre d'échantillons raisonnable - de l'ordre de 10000- il est possible d'extraire la clé. Ainsi face à cette vulnérabilité, il peut être nécessaire de reprogrammer intégralement un DES logiciel sécurisé.

Un but de la présente invention est de proposer un procédé et un système permettant de sécuriser les composants incorporant des cryptoprocesseurs ou équivalents notamment contre des attaques d e type DPA.

Les algorithmes cryptographiques considérés ici utilisent une clé secrète pour calculer une information de sortie en fonction d'une information d'entrée ; il peut s'agir d'une opération de chiffrement, de déchiffrement ou de signature ou de vérification de signature, ou d'authentification ou de non-répudiation. Ils sont construits de manière à ce qu'un attaquant, connaissant les entrées et les sorties, ne puisse en pratique déduire aucune information sur la clé secrète elle-même. De nombreuses applications basent leur sécurité sur les algorithmes cryptographiques à clé secrète tels que le DES ou plus récemment l'AES qui désormais s'impose comme le standard de chiffrement mondial (voir John Daemen, Vincent Rijmen ; AES proposal ; Rijndael : http://csrc.nist.gov/encryption/aes/rijndael/Rijndael.pdf).

On s'intéresse à une classe plus large que celle traditionnellement désignée par l'expression *algorithmes à clé secrète* ou *algorithmes symétriques.* En particulier, tout ce qui est décrit dans la présente demande de brevet s'applique également aux algorithmes dits à clé publique ou algorithmes asymétriques, qui comportent en fait deux clés : l'une publique, et l'autre, privée, non divulguée, cette dernière étant celle visée par les attaques décrites ci-dessous.

Les attaques de type « Analyse de Puissance Electrique », Power Analysis en langage anglo-saxon, développées par Paul Kocher et Cryptographic Research (Confer document Introduction to Differential Power Analysis a nd related Attacks by P aul Kocher, J oshua J affe, and Benjamin Jun, Cryptography Research, 870 Market St., Suite 1008, San Francisco, CA 94102, édition du document HTML à l'adresse URL :

http://www.cryptography.com/dpa/technical/index.html, introduit dans la présente demande à titre de référence) partent de la constatation qu'en réalité l'attaquant peut acquérir des informations, autres que la simple donnée des entrées et des sorties, lors de l'exécution du calcul, comme par exemple la consommation électrique du microcontrôleur ou le rayonnement électromagnétique émis par le circuit. Ces informations qui dépendent de quantités secrètes telles que la clé fuient hors de la carte.

L'analyse d'énergie électrique différentielle, Differential Power Analysis en langage anglo-saxon, en abrégé DPA, est une attaque permettant d'obtenir des informations sur la clé secrète contenue dans l'ensemble électronique, en effectuant une analyse statistique des enregistrements de consommation électrique effectués sur un grand nombre de calculs avec cette même clé.

On considère, à titre d'exemple non limitatif, le cas de l'algorithme DES (Data Encryption Standard), dont on peut trouver une description dans l'un des documents suivants :

FIPS PUB 46-2, Data Encryption Standard, 1994;
FIPS PUB 74, Guidelines for Implementing and Using the NBS Data Encryption Standard, 1981;
ANSI X3.92, American National Standard, Data Encryption Algorithm, 1981; ISO/IEC 8731:1987, Banking - Approved Algorithms for Message Authentication - Part 1: Data Encryption Algorithm (DEA).

ou encore dans l'ouvrage suivant :

Bruce Schneier, Applied Cryptography, 2ème édition, John Wiley & Sons, 1996, page 270.
Les documents précités sont introduits dans la présente demande à titre de référence.

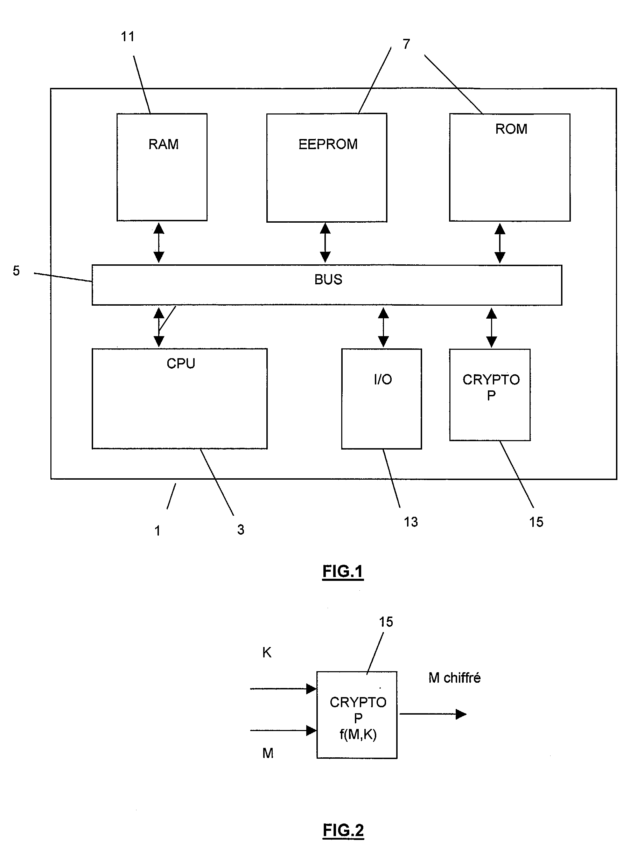

L'algorithme DES se déroule en 16 étapes appelées tours, confer figure 1 a. Dans chacun des 16 tours, une transformation F est effectuée sur 32 bits. Cette transformation F utilise huit transformations non linéaires de 6 bits sur 4 bits, qui sont codées chacune dans une table appelée boîte-S, confer figure 1b, où les boîtes S sont notées S1, S2, ..., S8.

L'attaque DPA sur le DES peut être mise en oeuvre de la manière suivante :

1 ère étape : On fait des mesures de consommation sur le premier tour, ceci pour 1000 calculs de DES. On note E[1], ..., E[1000] les valeurs d'entrée de ces 1000 calculs. On note C[1], ..., C[1000] les 1000 courbes correspondantes de consommation électrique mesurées lors de ces calculs. On calcule également la courbe moyenne CM des 1000 courbes de consommation.

2ème étape : On s'intéresse, par exemple, au premier bit de sortie de la première boîte-S lors du premier tour. Notons b la valeur de ce bit. Il est facile de voir que b ne dépend que de 6 bits de la clé secrète. L'attaquant fait une hypothèse sur les 6 bits concernés. Il calcule — à partir de ces 6 bits et des E[i] - les valeurs théoriques attendues pour b. Cela permet de séparer les 1000 entrées E[1], ..., E[1000] en deux catégories : celles qui donnent b=0, et celles qui donnent b=1.

3ème étape : On calcule maintenant la moyenne CM' des courbes correspondant à des entrées de la première catégorie, c'est-à-dire pour lesquelles b=0. Si CM et CM' présentent une différence notable, on considère que les valeurs retenues pour les 6 bits de clé étaient les bonnes. Si CM et CM' ne présentent pas de différence sensible, au sens statistique, c'est-à-dire pas de différence nettement supérieure à l'écart type du bruit mesuré, on recommence la 2ème étape avec un autre choix pour les 6 bits.

4ème étape : On répète les étapes 2 et 3 avec un bit cible b issu de la deuxième boîte-S, puis de la troisième boîte-S, ..., jusqu'à la huitième boîte-S. On obtient donc finalement 48 bits de la clé secrète.

5ème étape : Les 8 bits restants peuvent être trouvés par recherche exhaustive.

Cette attaque ne nécessite aucune connaissance sur la consommation électrique individuelle de chaque instruction, ni sur la position dans le temps de chacune de ces instructions. Elle s'applique de la même manière si on suppose que l'attaquant connaît des sorties de l'algorithme et les courbes de consommation correspondantes. Elle repose uniquement sur l'hypothèse fondamentale selon laquelle :

Hypothèse fondamentale : Il existe une variable intermédiaire, apparaissant dans le cours du calcul de l'algorithme, telle que la connaissance de quelques bits de clé, en pratique moins de 32 bits, permet de décider si deux entrées, respectivement deux sorties, donnent ou non la même valeur pour cette variable.

Tous les algorithmes utilisant des boîtes-S, tels le DES, sont potentiellement vulnérables à la DPA, car les modes de réalisation usuels restent en général dans le cadre de l'hypothèse mentionnée ci-dessus.

Les attaques dites par analyse d'énergie électrique de haut niveau, High-Order Differential Power Analysis en langage anglo-saxon, en abrégé HO-DPA, sont une généralisation de l'attaque DPA décrite précédemment. Elles peuvent utiliser plusieurs sources d'information différentes, outre la consommation elles peuvent mettre en jeu les mesures de rayonnement électromagnétique, de température, etc. et mettre en oeuvre des traitements statistiques plus sophistiqués que la simple notion de moyenne, des variables intermédiaires (généralisant le bit b défini ci-dessus) moins élémentaires. Néanmoins, elles reposent exactement sur la même hypothèse fondamentale que la DPA.

**RESUME DE L'INVENTION**

La présente invention concerne un procédé de s écurisation d'un ensemble électronique comprenant un composant matériel susceptible de mettre en oeuvre de manière autonome un processus de calcul utilisant une clé K, caractérisé en ce qu'il consiste à calculer au moins deux clés nouvelles $K'^i$ telles que pour au moins un i=j déterminé, $K'^j = K$ et pour au moins un i=t, $K'^t <> K$ et à effectuer à l'aide dudit composant matériel ledit processus de calcul successivement avec chacune desdites clés $K'^i$ calculées.

Selon une forme de réalisation particulière, le procédé consiste à calculer $l = \alpha\, m$ clés nouvelles $K'^1$ ..., $K'^l$ de manière que pour un j déterminé ($0<j<n+1$), les sous-clés $K'^i$ ($0<i<l+1$) prennent toutes les valeurs possibles, y compris la valeur de la sous-clé Kj et à exécuter la fonction cryptographique f matériel avec ces l nouvelles clés $K'^1$, ..., $K'^l$, de manière aléatoire.

La présente invention concerne également un ensemble électronique et par exemple une carte à puce et un programme permettant d'implémenter ledit procédé.

**DESCRIPTION SOMMAIRE DES DESSINS**

D'autres buts, avantages et caractéristiques de l'invention apparaîtront à la lecture de la description qui va suivre de la mise en oeuvre du procédé selon l'invention et d'un mode de réalisation d'un ensemble électronique adapté pour cette mise en oeuvre, donnés à titre d'exemple non limitatif en référence aux dessins ci-annexés dans lesquels :

- la figure 1 montre une représentation schématique d'un ensemble électronique selon la présente invention ;
- la figure 2 montre une représentation schématique d'un composant matériel dudit ensemble selon la figure 1 ;
- la figure 3 montre une représentation schématique du procédé selon la présente invention.

## MANIERE DE REALISER L'INVENTION

Le procédé selon l'invention vise à sécuriser un ensemble électronique, et par exemple un système embarqué tel qu'une carte à puce mettant en oeuvre un processus de calcul cryptographique qui utilise une clé secrète. L'ensemble électronique comprend des moyens de traitement d'information tels qu'un processeur et des moyens de stockage d'information tels qu'une mémoire.

A titre d'exemple non limitatif, l'ensemble électronique décrit dans ce qui suit correspond à un système embarqué comprenant un module électronique 1 illustré sur la figure 1. De tels modules sont réalisés le plus souvent sous la forme d'un microcircuit électronique intégré monolithique, ou puce, qui une fois protégé physiquement par tout moyen connu peut être monté sur un objet portatif tel que par exemple une carte à puce, carte à microcircuit ou autre utilisable dans divers domaines.

Le module électronique 1 à microprocesseur comprend un microprocesseur CPU 3 relié de façon bidirectionnelle par un bus 5 interne à une mémoire 7 non volatile de type ROM, EEPROM, Flash, FeRam ou autre contenant un programme à exécuter, une mémoire 11 vive de type RAM, des moyens 13 I/O d'entrée/sortie pour communiquer avec l'extérieur, et une unité 15 de calcul (CRYPTO P), appelé cryptoprocesseur, composant susceptible d'effectuer u n calcul cryptographique de manière autonome tel que par exemple un calcul de DES. Comme le montre la figure 2, le cryptoprocesseur 15 dudit module 1 exécute un processus f de calcul en utilisant une clé secrète K, stockée dans une zone secrète d'une mémoire, par exemple de type EEPROM sur un message M.

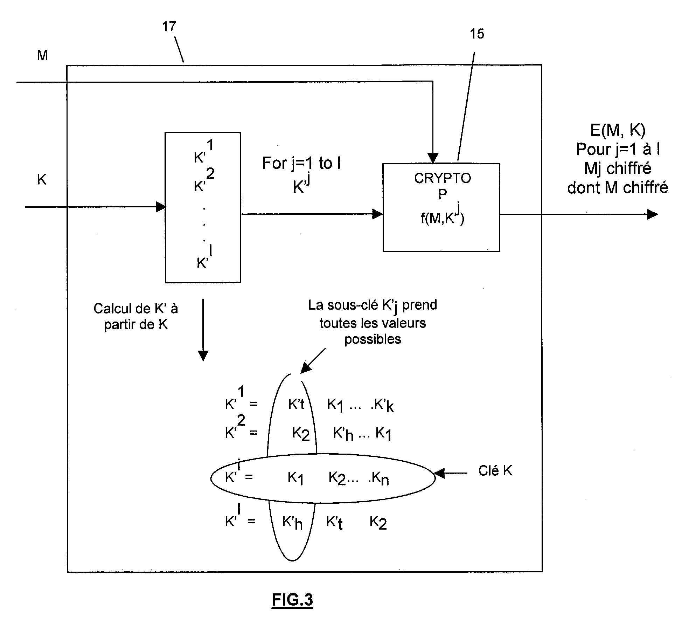

Tout d'abord considérons la solution sous sa forme générale. Comme le montre la figure 3, il s'agit de calculer le résultat E (M,K) d'une fonction cryptographique E sur un message M et ce en utilisant la clé K. Pour cela, on dispose d'une fonction f qui, en tant que boîte noire effectue le même calcul que E mais qui ne résiste pas notamment à la DPA. On considère de plus que la clé K intervient dans l'algorithme sous la forme de n sous-clés de petite taille mb (disons mb<10 bits soit $m=2^{mb}$ possibilités de valeurs pour chaque sous-clé), qui seront par la suite notées K1,K2, ... , Kn, et qui sont susceptibles d'être attaquées notamment par DPA. Les sous-clés ont dans la forme de réalisation décrite ci-dessous la même taille ; la présente invention s'applique également pour des sous-clés de taille différente.

La présente invention consiste à ajouter un module 17 logiciel extérieur au cryptoprocesseur pour sécuriser la fonction cryptographique mise en oeuvre par ledit cryptoprocesseur 15.

La présente invention consiste, comme le montre la figure 3, à calculer I=$\alpha$ m clés nouvelles $K'^1$, ..., $K'^l$ de manière que pour un j déterminé (0<j<n+1 ), chaque sous-clé $K'^i_j$ (0<i<l+1 ) prenne toutes les valeurs possibles, et selon une forme de réalisation particulière $\alpha$ fois, y compris la valeur de la sous-clé Kj et à exécuter la fonction cryptographique f matériel avec ces I nouvelles clés $K'^1$, ..., $K'^l$, de manière aléatoire.

Dit d'une autre manière, l'idée est d'effectuer I = $\alpha$ m calculs successifs avec des clés $K'^i$, $0\leq i <l$ telles que:
Il existe i tel que $K'^i =K$
Pour tous les j on ait {$K'^i_j$, $0\leq i<n$ } = {0,1, ... ,n-1} avec chaque sous-clé apparaissant exactement $\alpha$ fois.

Cela signifie en fait que l'on va effectuer successivement plusieurs calculs avec différentes clés (dont la vraie) de telle manière que chaque sous-clé possible apparaisse le même nombre de fois. Les calculs seront de plus effectués suivant un ordre aléatoire. Ainsi l'attaquant n'a aucune chance par DPA de distinguer la bonne sous-clé car celle-ci n'apparaît ni plus ni moins qu'une autre.

Voyons à présent comment cette contre-mesure (notée CM dans la suite) s'applique à différents algorithmes.

Application simple au DES

Notations

Dans le cas du DES nous adopterons les notations suivantes:

PC1 représentera la permutation initiale de la clé qui réduit celle-ci de 64 à 56 bits.
IPC1 représentera l'inverse de PC1 (donc de 56 bits vers 64) où l'on complète les 8 bits manquants pas n'importe quoi (les bits de parité sont souvent utilisés).
PC2 représentera la combinaison permutation compressive (56 bits vers 48 bits) et shift de la clé au premier round.
IPC2 représentera l'inverse de PC2 (donc de 48 vers 56 bits) où les 8 bits non déterminés (8=56-48) seront choisis arbitrairement (aléatoirement par exemple.}.

Enfin on notera PP la permutation de 48 bits vers 64 bits, combinaison de IPC2 et IPC1.

Ainsi on voit que PP permet à partir d'une clé K48 de 48 bits utilisée au premier round du DES de remonter à une clé globale K64 =PP(K48) qui a la propriété s uivante: en utilisant K64 comme clé lors d'un calcul de DES on obtient comme première sous-clé au premier round K48.

Voyons alors comment l'on peut appliquer concrètement notre contre-mesure.

1.1 Première mise en oeuvre de la CM

Dans le cas du DES les sous-clés interviennent sous la forme de n=8 sous-clés de mb=6 bits chacune soit m=64 possibilités. On va alors effectuer 64 calculs successifs (soit $\alpha$ =1 ) avec les clés dérivées suivantes:

$$K_{00} = K \oplus PP( 000000 \mid 000000 \mid ... \mid 000000 \mid 000000 )$$
$$K_{01} = K \oplus PP( 000001 \mid 000001 \mid ... \mid 000001 \mid 000001 )$$
$$K_{02} = K \oplus PP( 000010 \mid 000010 \mid ... \mid 000010 \mid 000010 )$$
$$K_{03} = K \oplus PP( 000011 \mid 000011 \mid ... \mid 000011 \mid 000011 )$$
$$\cdot$$
$$\cdot$$
$$\cdot$$
$$K_{61} = K \oplus PP( 111101 \mid 111101 \mid ... \mid 111101 \mid 111101 )$$
$$K_{62} = K \oplus PP( 111110 \mid 111110 \mid ... \mid 111110 \mid 111110 )$$
$$K_{63} = K \oplus PP( 111111 \mid 111111 \mid ... \mid 111111 \mid 111111 )$$

Ainsi il est aisé de voir que pour chacune des huit sous-clés intervenant au premier round, les 64 valeurs possibles sont également représentées et que de plus la vrai clé K00 est présente dans la liste. Il suffit alors d'effectuer les 64 calculs de DES avec les 64 clés dérivées dans un ordre aléatoire et de sélectionner le résultat final comme étant celui où la bonne clé a été utilisée.

Cela peut éventuellement être effectué de la manière suivante. On alloue 16 octets de mémoire pour stocker le résultat. On alloue également un octet de plus pour chaque Ki (qui sera en l'occurrence initialisé à 0 ou 8) qui indiquera à partir de quel octet on stocke le résultat en mémoire. Ainsi cet octet vaudra 8 pour toutes les clés sauf pour K00 où il vaudra 0. Cela permet alors d'utiliser un code assez générique qui pourrait ressembler au pseudo-code C suivant en considérant que l'on a une fonction qui effectue une copie mémoire, une qui calcule les PP(i|...|i) et une qui randomise les 64 clés.

```
DES_encrypt_DPA( unsigned char in[8],
                         unsigned char cle[8],
                         unsigned char out[8] )
{
    int i;
    unsigned char M1[8], M2[16], K[64][9];

    memcopy(K[0],cle,8);
    K[0][8] = 0;

    for(i=1; i<64; i++)
    {
        memcopy(K[i], cle XOR PP(i | ... | i), 8);
        K[i][8] = 8;
    }

    randomize_0_63(K);

    for(i=0; i<64; i++)
    {
        memcopy(M1, in, 8);
        DES_encrypt_non_DPA(M1,K[i]);

        for(j=0;j<8;j++)
        {
            M2[K[i][8] + j] = M1[j];
        }
    }

    memcopy(out, M2, 8);
}
```

1.2 Considérations générales de sécurité

D'un point de vue DPA, il est assez facile de voir que, tout attaquant ne pouvant distinguer à chacune des 64 exécutions du DES s'il s'agit de la véritable clé ou non, ne pourra pas attaquer l'algorithme avec une DPA classique. Cependant il faut être conscient que la programmation de la méthode implique d'être très rigoureux car la moindre analyse permettant de distinguer -même rarement- la bonne clé annihile complètement la CM ! Ainsi il faut faire attention aux points critiques suivants:

- La randomisation: c'est cette étape qui va déplacer la véritable clé à un emplacement $0 \leq i < 64$ qui doit être inconnu de l'extérieur.
- La copie du résultat (boucle sur j): en effet là aussi interviennent les deux valeurs 0 ou 8 qui permettraient à l'attaquant si elles sont dévoilées de savoir quel DES est celui utilisant la véritable clé.

3.4 Extensions de la CM et considérations diverses

- Si l'on regarde d'un peu plus prêt la fonction PP il est facile de voir qu'il n'est pas nécessaire d'utiliser comme masque de la clé la même valeur pour les huit sous-clés comme cela a été fait précédemment. Il suffit juste que, considérant une sous-clé i, les 64 valeurs possibles apparaissent. En effet, il n'est pas important que pour une sous-clé donnée l'ordre des 64 valeurs soit le même que pour une autre sous clé | Le seul impératif est que la valeur 0 de sous-clé (celle pour laquelle la véritable sous-clé e st u tilisée) apparaisse en même temps pour les huit sous-clés afin que l'un des 64 calculs donne le résultat correct. Ainsi on peut imaginer une dérivation du type suivant:

$$K_{00} = K \oplus PP( 000000 \mid 000000 \mid ... \mid 000000 \mid 000000 )$$
$$K_{01} = K \oplus PP( 011000 \mid 001101 \mid ... \mid 001001 \mid 111100 )$$
$$K_{02} = K \oplus PP( 010101 \mid 001111 \mid ... \mid 001011 \mid 010000 )$$
$$K_{03} = K \oplus PP( 110011 \mid 100010 \mid ... \mid 000011 \mid 010010 )$$

$$K_{61} = K \oplus PP( 101011 \mid 011100 \mid ... \mid 110001 \mid 101000 )$$
$$K_{62} = K \oplus PP( 100111 \mid 101010 \mid ... \mid 000110 \mid 010111 )$$
$$K_{63} = K \oplus PP( 001110 \mid 010111 \mid ... \mid 011100 \mid 110001 )$$

Pour cela il suffit d'avoir une fonction qui effectue une permutation aléatoire des valeurs [1,63].

Il est important de noter que le fait que le masque ( 000000 | ... | 000000 ) apparaisse toujours en première position n'est pas un problème car les clés dérivées sont ensuite permutées aléatoirement avant d'être utilisées. Si l'on considère que l'on a une fonction PP2(i,val) qui remplace les 6 bits de la valeur val au bon endroit pour que celle ci corresponde à la sous-clé i , on obtient alors le pseudo code C suivant:

```
void
DES_encrypt_DPA(unsigned char in[8],
                unsigned char cle[8],
                unsigned char out[8] )
{
    int i,j;
    unsigned char M1[8], M2[16], K[64][9];

    memcopy(K[0],cle,8);
    K[0][8] = 0;

    for(i=0;i<64;i++)
    {
        memcopy(K[i],cle,8);
    }

    for(i=0; i<8; i++)
    {
        unsigned char Perm63[63];

        randomize_1_63(Perm63);
        for(j=1; j<64; j++)
        {
          K[j] = K[j] XOR PP2(i,Perm[j]);
        }
    }

    randomize_0_63(K);

    for(i=0; i<64; i++)
    {
        memcopy(M1, in, 8);
        DES_encrypt_non_DPA(M1,K[i]);

        for(j=0;j<8;j++)
        {
            M2[K[i][8] + j] = M1[j];
        }
    }

    memcopy(out, M2, 8);
}
```

- La randomisation des 64 clés dérivées peut être effectuée par la méthode classique suivante (cf. Crypto'2002 ou l'article Akkar/Goubin sur la HODPA sur le DES) qui consiste a parcourir avec un indice i les clés de 0 à 63 et d'échanger la clé d'indice i avec une clé d'indice choisi au hasard entre 0 et 63:

```
void
randomize(unsigned char table[64])
{



    int i, i_temp;
    unsigned char temp;

    for(i=0; i<64; i++)
    {
        table[i] = i;
    }

    for(i=0; i<64; i++)
    {
        i_temp = random() % 64;
        temp = table[i];
        table[i] = table[i_temp];
        table[i_temp] = temp;
    }
}
```

## 3.5 Autres Rounds du DES

Nous avons vu comment protéger le premier round du DES contre la DPA. Dans le cas où, dans le protocole utilisé, le DES est plutôt vulnérable au 16ème round une méthode similaire est bien sur envisageable. Seule la fonction PP changera et correspondra au key-scheduling du 16ème round ! Il est par ailleurs possible d'utiliser 64 masques de clés ayant la propriété de protéger à la fois le premier et le dernier round. Les 64 clés masques de clé suivants ont par exemple cette propriété :

```
0000000000000000    8444054405410000    410900B100033003    C54D05F505423003

0093420342004141    84D7474747414141    419A42B242037142    C5DE47F647427142
0021000000950C9C    8465054405D40C9C    412800B100963C9F    C56C05F505D73C9F
00B2420342954DDD    84F6474747D44DDD    41BB42B242967DDE    C5FF47F647D77DDE
2200300918288100    A644354D1D698100    630930B8182BB103    E74D35FC1D6AB103
2293720A5A28C041    A6D7774E5F69C041    639A72BB5A2BF042    E7DE77FF5F6AF042
2221300918BD8D9C    A665354D1DFC8D9C    632830B818BEBD9F    E76C35FC1DFFBD9F
22B2720A5ABDCCDD    A6F6774E5FFCCCDD    63BB72BB5ABEFCDE    E7FF77FF5FFFFCDE
18008800A0000321    9C448D44A5410321    590988B1A0033322    DD4D8DF5A5423322
1893CA03E2004260    9CD7CF47E7414260    599ACAB2E2037263    DDDECFF6E7427263
18218800A0950FBD    9C658D44A5D40FBD    592888B1A0963FBE    DD6C8DF5A5D73FBE
18B2CA03E2954EFC    9CF6CF47E7D44EFC    59BBCAB2E2967EFF    DDFFCFF6E7D77EFF
3A00B809B8288221    BE44BD4DBD698221    7B09B8B8B82BB222    FF4DBDFCBD6AB222
3A93FA0AFA28C360    BED7FF4EFF69C360    7B9AFABBFA2BF363    FFDEFFFFFF6AF363
3A21B809B8BD8EBD    BE65BD4DBDFC8EBD    7B28B8B8B8BEBEBE    FF6CBDFCBDFFBEBE
3AB2FA0AFABDCFFC    BEF6FF4EFFFCCFFC    7BBBFABBFABEFFFF    FFFFFFFFFFFFFFFF
```

Enfin i nutile de préciser que cette contre m esure (ou du moins les parties critiques) devra être implémentée en assembleur afin de ne pas introduire une vulnérabilité du à une méconnaissance des méthodes utilisées par le compilateur.

2. Application à l'AES

Il est évident que cette méthode peut s'appliquer d'une manière similaire à l'AES. Cela est même plus simple à expliquer car la première sous-clé utilisée -et qui est souvent la cible- est constituée de la clé sans autre transformation ! Une autre différence pratique vient du fait que la clé intervient 8 bits par 8 bits. Ainsi dans le cas d'un AES avec clé et message de 128 bits on obtient une dérivation des clés et un pseudo code C de la manière suivante:

$$K_{00} = K \oplus ( 00000000 \mid 00000000 \mid ... \mid 00000000 \mid 00000000 )$$
$$K_{01} = K \oplus ( 00000001 \mid 00000001 \mid ... \mid 00000001 \mid 00000001 )$$
$$K_{02} = K \oplus ( 00000010 \mid 00000010 \mid ... \mid 00000010 \mid 00000010 )$$
$$K_{03} = K \oplus ( 00000011 \mid 00000011 \mid ... \mid 00000011 \mid 00000011 )$$

.

.

.

$$K_{61} = K \oplus ( 11111101 \mid 11111101 \mid ... \mid 11111101 \mid 11111101 )$$
$$K_{62} = K \oplus ( 11111110 \mid 11111110 \mid ... \mid 11111110 \mid 11111110 )$$
$$K_{63} = K \oplus ( 11111111 \mid 11111111 \mid ... \mid 11111111 \mid 11111111 )$$

```
void
AES_encrypt_DPA( unsigned char in[16],
                 unsigned char cle[16],
                 unsigned char out[16] )
{
    int i;
    unsigned char M1[16], M2[32], K[256][17];

    memcopy(K[0],cle,16);
    K[0][16] = 0;

    for(i=1; i<256; i++)
    {
        memcopy(K[i], cle XOR (i | ... | i), 16);
        K[i][8] = 16;
    }

    randomize_0_255(K);

    for(i=0; i<256; i++)
    {
        memcopy(M1, in, 16);
        AES_encrypt_non_DPA(M1,K[i]);



        for(j=0;j<16;j++)
        {
            M2[K[i][16] + j] = M1[j];
        }
    }

    memcopy(out, M2, 16);
}
```

La seule véritable différence vient du fait que le key-scheduling de l'AES n'est pas, contrairement au DES, linéaire sauf pour la première sous-clé. Ainsi si l'on veut protéger le dernier round par cette méthode, une méthode similaire au DES n'est pas envisageable. Il faut alors stocker non pas le plan de dérivation d e clé m ais u n ensemble d e 256 clés s pécifiques à une clé donnée.

3. Conclusion

Ainsi l'on voit que moyennant l'exécution de 64 DES (ou 256 AES) et quelques calculs annexes, il est possible de protéger un algorithme cryptograhique (DES ou un AES par exemple) contre la DPA à partir d'une brique rapide m ais non p rotégée. 64 DES ou 256 AES, cela peut paraître long, cependant dans la pratique ces opérations en Hard prennent des temps quasi-négligeables.

**Revendications**

1.  Procédé de sécurisation d'un ensemble électronique comprenant un composant matériel susceptible de mettre en oeuvre de manière autonome un processus f de calcul utilisant une clé K, **caractérisé en ce qu'**il consiste à calculer au moins deux clés nouvelles $K'^i$ telles qu'il existe au moins une desdites clés nouvelles qui soit identique à la clé K et au moins une desdites clés nouvelles qui soit différente de la clé K et à effectuer à l'aide dudit composant matériel ledit processus f de calcul successivement avec chacune desdites clés $K'^i$ calculées.

2.  Procédé selon la revendication 1, caractérisé en qu'il consiste à effectuer ledit processus de calcul avec lesdites clés $K'^i$ dans un ordre aléatoire.

3.  Procédé selon l'une des revendications 1 ou 2, **caractérisé en ce que** la clé K se subdivise en sous-clés $K_1$, ..., $K_n$, et **en ce qu'**il existe au moins un i tel que la clé $K'^i$ se différencie de K pour au moins une sous-clé $K'^i_j$.

4.  Procédé selon l'une des revendications 1 à 3, **caractérisé en ce que** la clé K se subdivise en sous-clés $K_1$, ..., $K_n$, et **en ce que** le procédé consiste à calculer $I = \alpha\ m$ clés nouvelles $K'^1$, ..., $K'^I$, m représentant le nombre de valeurs possibles pour une des sous-clés $K'^i_j$ de $K'^i$, de manière que pour un j déterminé ($0 < j < n+1$), les sous-clés $K'^i_j$ ($0 < i < I+1$) prennent toutes les valeurs possibles, y compris la valeur de la sous-clé Kj de K.

5.  Procédé selon la revendication 4, **caractérisé en ce que** les sous-clés $K'^i_j$ ($0 < i < I+1$) prennent toutes les valeurs possibles $\alpha$ fois.

6.  Ensemble électronique comprenant des moyens de stockage d'un processus de calcul, des moyens de traitement dudit processus, un composant matériel susceptible de mettre en oeuvre de manière autonome un processus de calcul utilisant une clé K, **caractérisé en ce qu'**il comprend un module logiciel associé au composant matériel susceptible de calculer au moins deux clés nouvelles $K'^i$ telles qu'il existe au moins une desdites clés nouvelles qui soit identique à la clé K et au moins une desdites clés nouvelles qui soit différente de la clé K et **en ce que** le module logiciel est associé au composant matériel de manière à lui transmettre successivement les clés nouvelles calculées pour mettre en oeuvre ledit processus de calcul avec chacune desdites clés nouvelles $K'^i$.

7.  Ensemble électronique selon la revendication 6, caractérisé en ce ledit module logiciel transmet successivement les clés nouvelles calculées dans un ordre aléatoire.

8.  Programme d'ordinateur comprenant des instructions de code de programme pour l'exécution des étapes du procédé selon l'une des revendications 1 à 5 lorsque ledit programme est exécuté dans un ensemble électronique.

11

RAM

EEPROM

ROM

5

BUS

CPU

I/O

CRYPTO
P

1

3

13

15

**FIG.1**

15

K

CRYPTO
P
f(M,K)

M chiffré

M

**FIG.2**

**FIG.3**

# EP 1 457 858 A1

**Office européen des brevets**

## RAPPORT DE RECHERCHE EUROPEENNE

Numéro de la demande

EP 03 29 0655

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 01 31422 A (VON WILLICH MANFRED) 3 mai 2001 (2001-05-03) * page 3, ligne 11 - ligne 37 * * page 5, ligne 26 - page 6, ligne 37 * * page 8, ligne 27 - page 9, ligne 20 * * page 11, ligne 17 - ligne 29 * * page 12, ligne 7 - ligne 14 * * revendications 1,3 * * figures 8,9 * --- | 1-8 | G06F1/00 |
| A | CHARI S ET AL: "TOWARDS SOUND APPROACHES TO COUNTERACT POWER-ANALYSIS ATTACKS" ADVANCES IN CRYPTOLOGY. CRYPTO '99. 19TH ANNUAL INTERNATIONAL CRYPTOLOGY CONFERENCE. SANTA BARBARA, CA, AUG. 15 - 19, 1999. PROCEEDINGS, LECTURE NOTES IN COMPUTER SCIENCE;VOL. 1666, BERLIN: SPRINGER, DE, 1999, pages 398-412, XP000911819 ISBN: 3-540-66347-9 * abstract * * page 402 - page 404 * --- | 1-8 | |
| A | EP 1 109 350 A (SAGEM) 20 juin 2001 (2001-06-20) * page 3, alinéa 24 - page 4, alinéa 30 * ----- | 1-8 | **DOMAINES TECHNIQUES RECHERCHES (Int.Cl.7)** G06F |

Le présent rapport a été établi pour toutes les revendications

| Lieu de la recherche | Date d'achèvement de la recherche | Examinateur |
|---|---|---|
| MUNICH | 10 novembre 2003 | Bichler, M |

EPO FORM 1503 03.82 (P04C02)

EP 1 457 858 A1

## ANNEXE AU RAPPORT DE RECHERCHE EUROPEENNE
## RELATIF A LA DEMANDE DE BREVET EUROPEEN NO.

EP 03 29 0655

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-11-2003

| Document brevet cité au rapport de recherche | | Date de publication | Membre(s) de la famille de brevet(s) | | Date de publication |
|---|---|---|---|---|---|
| WO 0131422 | A | 03-05-2001 | AU | 2301401 A | 08-05-2001 |
| | | | CA | 2388971 A1 | 03-05-2001 |
| | | | CN | 1413398 T | 23-04-2003 |
| | | | EP | 1226681 A2 | 31-07-2002 |
| | | | JP | 2003513490 T | 08-04-2003 |
| | | | WO | 0131422 A2 | 03-05-2001 |
| EP 1109350 | A | 20-06-2001 | FR | 2802741 A1 | 22-06-2001 |
| | | | EP | 1109350 A1 | 20-06-2001 |

EPO FORM P0460

Pour tout renseignement concernant cette annexe : voir Journal Officiel de l'Office européen des brevets, No.12/82

14